Europäisches Patentamt

(19) European Patent Office

Office européen des brevets

(11) **EP 1 041 746 B1**

(12) **EUROPEAN PATENT SPECIFICATION**

(45) Date of publication and mention
of the grant of the patent:
**27.08.2003 Bulletin 2003/35**

(51) Int Cl.$^7$: **H04B 7/26**

(21) Application number: **99400750.8**

(22) Date of filing: **29.03.1999**

(54) **Process for synchronising base stations in a wireless communication network**

Verfahren zur Synchronisierung von Basisstationen in einem drahtlosen Kommunikationsnetzwerk

Procédé pour la synchronisation de stations de base dans un système de communication sans fil

(84) Designated Contracting States:
**DE ES FI FR GB IT SE**

(43) Date of publication of application:
**04.10.2000 Bulletin 2000/40**

(73) Proprietor: **ALCATEL**
**75008 Paris (FR)**

(72) Inventor: **Blanc, Patrick**
**92130 Issy les Moulineaux (FR)**

(74) Representative: **El Manouni, Josiane**
**Compagnie Financière Alcatel**
**Départememt de Propriété Industrielle,**
**5, rue Noel Pons**
**92734 Nanterre Cedex (FR)**

(56) References cited:
**EP-A- 0 817 405       US-A- 5 363 376**
**US-A- 5 528 597**

**Description**

The present invention relates to the field of wireless communication, and more specifically relates to synchronisation of base stations in a wireless communication system or network.

Wireless communication systems are comprised of cells, each cell normally corresponding to a base station, to which user equipment or mobile stations may connect for establishing a communication. There is a need for synchronising those base stations, for a variety of purposes; this is for instance the case in UMTS (Universal Mobile Telephone Service), where a TDD (Time Division Duplex) network requires a synchronisation of base stations (or Node B in the UMTS specification) at the frame level, in order to reach a good performance.

This problem is discussed in US-A-5 528 597, in the case of a TDMA (time division multiple access) network; this document suggests that a newly added base station synchronises to existing network of base station. The newly added base station receives downlink signal of a neighbouring active base station, and synchronises its receive slot in the communication frame with a corresponding forward time slot of that base station. In order to synchronise with neighbouring base stations, the newly added base station first turns its transmitter off, and listens to the neighbouring base stations, so as to establish a list of neighbouring stations. Once this list is established, the base station turns its transmitter on so as to measure timing offset with neighbouring base stations, base on the fixed timing relationship between the forward and reverse channels in the system. This document also suggest repeating the synchronisation process periodically to counter changes due to drift or offset over time ; however, the process for synchronising an active base station is not explained in details.

EP-A-0 817 405 discloses a TDMA TDD network, where base stations of adjacent cells transmit control channels having the same frequency; this document suggests selecting a time-slot for transmitting the control channel of one cell so that the time slot corresponds to the reception time slot of a control carrier which does not contend with the transmission time slot of the control channel of the base station of an adjacent cell. This allows good connectivity of the mobiles in a cell, since the transmission time slots of control carriers of adjacent base stations do not interfere with the reception time slot of the control carrier of the cell. This document does not discuss synchronisation of the base stations, but simply deals with connectivity inside of a cell.

EP-A-0 398 773 discusses the problem of synchronisation of mobiles and base stations in a TDMA network; it teaches against synchronisation of base stations, which is considered to be costly and unreliable in a network covering a large area. This document suggests assessing the time difference between two base stations in a mobile, by measuring :

- the time difference $TM_{ij}$ between reception of signals from adjacent base stations i and j;
- the transmission time $t_i$ and $t_j$ from each base station to the mobile.

The time difference between two base stations is then computed as $TM_{ij} + t_i - tj$. This computation makes handover easier, and also permits localisation of the mobile.

WO-A-94 28 643 discusses radio synchronisation of base stations in a GSM-type TDMA network. This document suggests listening to neighbouring base stations so as to derive synchronisation of a cell. This is not a problem in this document, since adjacent base stations use different frequencies.

US-A-5 519 759 also discusses radio- synchronisation of base stations in a DECT network. This document suggest defining a fixed order for synchronising base stations, and using the same order any time the base stations need to be synchronised. It does not disclose the way a "slave" station should synchronise to the corresponding "master" station.

US-A-5 363 376 discloses that, in a TDM/TDMA digital radio communications system, time synchronisation between fixed ports is achieved by adjusting the timing of a first port in response to the average timing difference between the timing of that first port and the timing measured by that first port of the downlink signals transmitted by a fixed number of other ports in the system, which downlink signals are detected at the first port and determined to have the highest signal quality measures. Each of the other ports in the system sequentially performs the same process and the entire process is then reiterated a plurality of times at all of the ports until timing of the system converges. Besides, a timing difference is also adjusted by an estimated or calculated propagation delay, and an estimated delay is determined from a known average distance between ports as divided by the speed of the light, or

alternatively the actual propagation delay can be calculated if the receiving port is linked with a centralized data base that stores the coordinates of each port within the system. The present invention addresses the problem of synchronising base stations in a wireless communication network, in a TDD mode. In such a mode, the same

frequency is used for transmission and reception by a base station. The invention addresses the problem originating from the use of the same frequency by adjacent stations. This problem is notably encountered where the frequency reuse pattern is one ; in this case, all cells use the same frequency.

The invention also addresses the new problems that may occur when a base station is turned off to synchronise on the neighbouring base stations. When this solution is applied for maintaining synchronisation between active base stations, it may cause problems to user equipments ; indeed, user equipments monitor the base stations, and turning off base stations unexpectedly may cause a problem. In addition, a base station wishing to synchronise on another base station may be unable to synchronise , especially if adjacent base stations are turned off simultaneously.

The invention provides a solution to these problems which is defined by the appended claims.

A wireless communication system embodying the invention will now be described, by way of non-limiting example, and in reference to the accompanying drawings, where :

- figure 1 is a flowchart of the initial synchronisation process, when a base station is added to the network;
- figure 2 shows the timing reference acquisition;
- figure 3 shows the timing reference acquisition, which is not part of the present invention, when a mobile station is used for synchronising two base stations;
- figure 4 shows a mobile station and two base stations carrying out the process of figure 3.

The invention suggests listening to neighbouring base stations for synchronising a base station, be it at the time the base station is added to the network, or for maintaining synchronisation between active base stations. In order to listen to neighbouring base stations, the invention suggests turning off the transmitter of a base station ; it therefore suggests managing the turning off of base stations in the network, so that adjacent base stations are not turned off at the same time. The invention thus brings a solution to the new problems caused to the mobile stations due to base stations being turned off.

The invention notably applies to UMTS and is described in the rest of the present specification with reference to this type of wireless communication network. It should however be understood that the invention is not limited to this preferred embodiment, and applies to other types of TDD wireless communication systems, or more generally to transmission systems where adjacent base station use the same frequency, so that one base station has to turn off its transmitter in order to synchronise on another base station.

In a UMTS TDMA TDD system, each base station transmits a BCCH (Broadcast Control Channel), for signalling purposes. According to the present UMTS specification, the BCCH actually comprises a synchronisation channel (SCH) and a broadcast channel (BCH). The SCH is transmitted in one time slot of every frame, and is comprised of two synchronisation peaks. The BCH is actually the physical channel supporting BCCH ; it is not necessarily transmitted at every frame. It is contemplated that the BCH be transmitted only a given number of time at each multiframe.

A mobile station or UE (User Equipment) in a cell decodes the BCCH sent by its base station, and may also decode part of the BCCH of adjacent cells; this allows the mobile station to prepare for handover, and avoids any possible ambiguity on the BCCH. Indeed, any possible confusion between the BCCH of the base station and the BCCH of a remote base station is avoided by decoding the BCCH of adjacent base stations so as to recognise the current base stations.

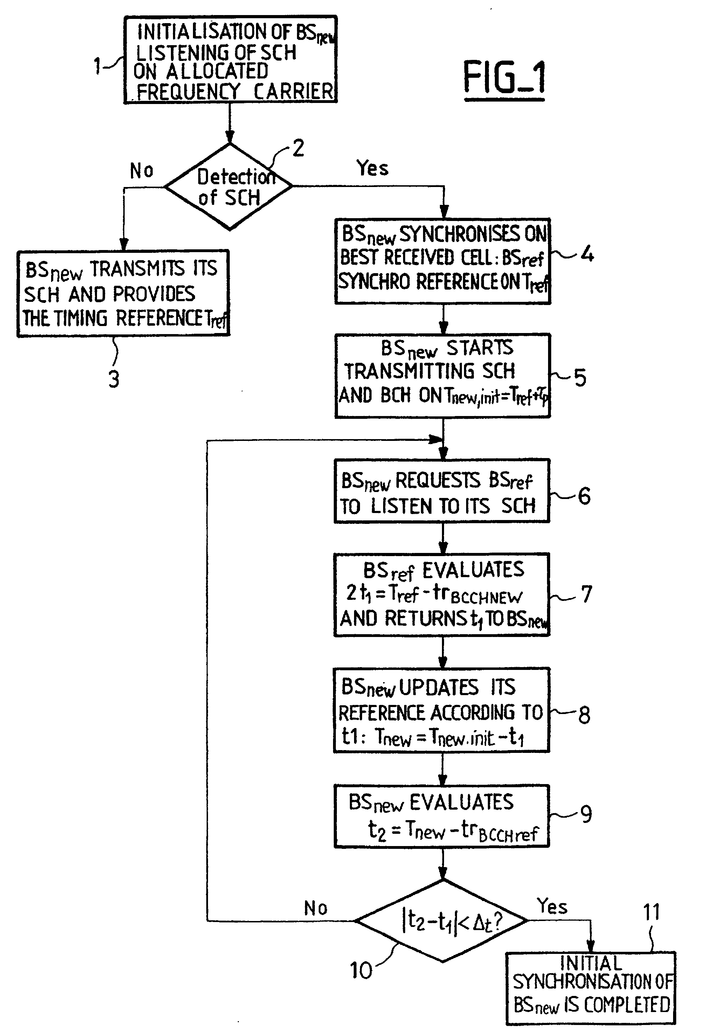

Figure 1 is a flowchart of the initial synchronisation process, when a base station is added to the network ; it shows how, according to the invention, a base station will turn its transmission off for listening to adjacent base station, so as to be able to synchronise on one of the adjacent base stations.

At step 1, the new base station - note $BS_{new}$ in the flowchart of figure 1 is initialised, and listens to SCH of adjacent cells on the allocated frequency or frequencies. As discussed above, in the TDD mode, at least one of these frequencies corresponds to the frequency of the new base station, so that the new base station has to turn transmission off for listening to adjacent base stations.

At step 2, after scanning allocated frequencies, the base station determines whether it has received any SCH from other base stations. If this is not the case, the process passes to step 3, and if this is the case, the process posses to step 4.

At step 3, the new base station has checked whether it was alone in the network, and has determined that it was alone in the network ; in this case, the base station will provide the timing reference for other BS to synchronise on it, at a later stage. The base station may start its operation, in a normal mode.

At step 4, the new base station has determined that other base stations are already in place around the new base station; thus, at least one of these base stations may be used for the purpose of synchronisation. The base station synchronises on one of these stations, e. g. on the best received base station $BS_{ref}$, by listening to the SCH of the best received base station $BS_{ref}$. The new base station thus obtains a synchronisation reference $T_{new}$. One way to proceed with this first synchronisation is to proceed as in the mobile initial cell search procedure described in 'UMTS XX. 13, UTRA TDD, physical layer procedures description', version 0.5.0, Tdoc SMG2 UMTS L1 613/98, December 98.

The base station is able to apply the same procedure as a mobile station ; the only difference is that the base station may require a better sensitivity since it could be at a distance around twice more than the BS to UE distance. The interference level may also be larger than for the mobile, and therefore the sensitivity level may need to be 3 to 5 dB better than for a UE. Evaluation of this difference in sensitivity and in interference level depends on the definition of the channel on which the base station will synchronise, - that is the SCH in the example of UMTS. In any case, improvement on sensitivity is achievable, considering the usage of antenna diversity at BS and a potential better receiver noise figure.

The first synchronisation obtained in step 4 depends on propagation delay from the reference base station to the newbase station. In the case of a TDMA TDD mode as provided in UMTS, the synchronisation information allows the new base station to define frames synchronised to the frames of the adjacent base station : a time slot offset around 20 μs may be obtained, according to the distance between the reference base station and the new base station. A better synchronisation may be obtained thanks to the iterative process described in steps 6 to 10.

More generally, the base station may use any synchronisation procedure for obtaining synchronisation on the already transmitting base station.

Once the new base station has acquired the first synchronisation, the process passes to step 5. In step 5, the new base station starts transmitting SCH and BCH according to the first synchronisation information obtained in step 4.

In step 6, the base station $BS_{new}$ requests the reference base station $BS_{ref}$ to listen to its SCH, in order to evaluate the time difference $t_1$ between the synchronisation reference $T_{ref}$ and the received time reference $T_{new}$ of the SCH from $BS_{new}$. For doing this, the reference base station $BS_{ref}$ needs to interrupt its SCH transmission, in order to be able to listen to the SCH of the new base station $BS_{ref}$ transmitted on the same frequency, and grossly at the same time.

Step 7 shows that after step 6, the reference base station listens to the SCH of the new station, and computes the time difference; for this computation, the reference base station takes into account the propagation time between the new base station and the reference base station. As shown in step 7, the computation of the time difference $t_1$ may use the following formula:

$$2.t_1 = T_{ref} - T_{rnew}$$

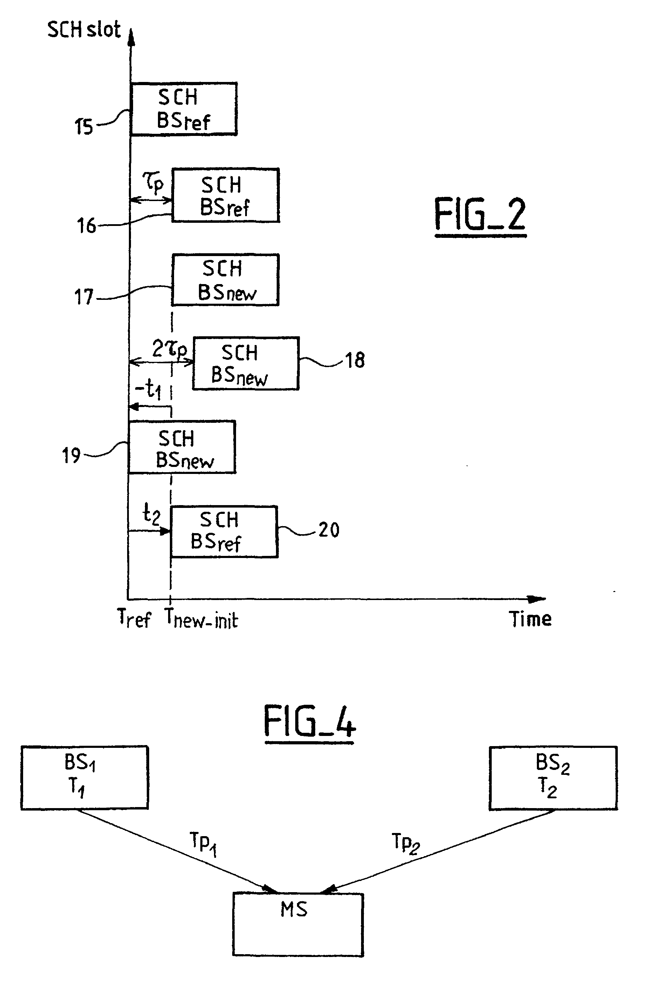

where $T_{rnew}$ is the time where the SCH signal is received from the new base station ; the reason for the factor 2 in this formula is discussed in reference to figure 2 : a first bias corresponds to the propagation time for the SCH signal to travel from the reference base station to the new base station ; a second bias corresponds to the propagation time for the SCH signal to travel from the new base station to the reference base station

The reference base station $BS_{ref}$ then transmits the computed time difference $t_1$ to the new base station, and the process passes to step 8. Transmission of this time difference is also discussed below.

In step 8, the new base station updates its time reference $T_{new}$ according to $t_1$.

The process then passes to step 9, where the new base station $BS_{new}$ then turn off its transmitter and evaluates then the time difference $t_2$ between $T_{new}$ and the time reference received on the SCH of the reference base station $BS_{ref}$. If the synchronisation of the reference base station and the new base station is perfect, this difference t2 only corresponds to the propagation time from the reference base station to the new base station, and equals $t_1$.

The process then passes to step 10; in this step, the new base station computes the difference between $t_1$ and $t_2$, and compares the absolute value of this difference with a threshold value $\Delta t$. If the absolute value of the difference is less than the threshold, the process passes to step 11 ; else the process passes again to step 6, and the computation of $t_1$ and $t_2$ is carried out again. Synchronisation of the new base station is thus an iterative process that goes on until the required accuracy $\Delta t$ is obtained.

In step 11, the initial synchronisation of the new base station is completed. The new base station may then start normal operation.

Information exchanges between BS - transmission of $t_1$ from the reference base station to the new base station, and transmission of $t_2$ from the new base station to the reference base station - may be transported on air using RACH (Random Access Channel) and FACH (Fast Access Channel) transport channels, or via the UTRAN or base station controller. Use of the UTRAN is preferred, since transmission of the time differences on the air interface might create high peaks of interference on RACH access slots and FACH slots ; indeed, as discussed above, the base stations may need to use higher transmitter power than mobiles in the cell.

In order to listen to the SCH of another base station, each base station, as discussed above, should interrupt the transmission of its own SCH. It is also preferable that the base station prevents mobiles from its own cell from using RACH channel when sending requests to other BSs, so that they may listen to their SCH. For this reason, it may be easier to exchange all signalling information between BSs via the UTRAN. The only remaining requirement on the air interface would then be the interruption of SCH transmission, for listening to the SCH of the other base station, so as to compute time difference.

The process of figure 1 is further explained with reference to figure 2. Figure 2 shows the timing reference acquisition according to the process of figure 1 ; it only shows the timing difference for each base station, in other words the position of the synchronisation signals on the SCH with respect to the time slots of a TDMA system.

15 shows the SCH of the reference base station ; as shown on the figure, it is correctly synchronised in the time slot, since the reference base station is used for synchronising other stations.

16 shows the timing of reception of the reference base station SCH by the new base station, as it occurs in step 4 of the flowchart of figure 1 ; as discussed above, the new base station receives the SCH of the reference base station with a timing offset $t_1$ that corresponds to the propagation time of the SCH from the reference base station to the new base station.

17 shows the sending by the new base station of its SCH to the reference base station ; the offset with respect to the reference time slot is still $t_1$.

18 shows reception of the SCH by the referenced base station ; as explained as regards step 7, the timing offset equal $2.t_1$.

19 shows the new base station adapting its time reference according to the value of $t_1$ received from the reference base station ; as discussed above, this value is preferably sent from the UTRAN.

20 shows the new base station receiving another SCH from the base station, for computing $t_2$, as shown in step 9 of figure 1.

The process of figures 1 and 2 ensure synchronisation of the reference base station, and of the new base station, so that a newly added base station is synchronised at slot level to an existing base station ; this ensures that slots do not overlap between each other in adjacent cells. In the TDD mode, this will :

- reduce mobile to mobile or base to base interference situations ;
- allow implementation of efficient dynamic channel allocation procedures to manage the TDMA component of the TDD mode.

Synchronisation of base stations according to the invention avoids using in the TDD distributed DCA procedures in the mobile (such as DECT DCA algorithms) in order to escape from interference situations, and select the available slots. As compared to the capacity of a non-synchronised network, the capacity of a network according to the invention is significantly higher, because of reduced slot overlap between cells. The invention limit creation of non-controlled sources of interference in the network, the non-synchronisation of uplink and downlink transmissions may create a lot of, which could disturb the radio resource management functions.

As discussed in the description of figures 1 and 2, synchronisation of base stations according to the invention implies that each base station, at some point of time, listens to the other base station ; in a network where adjacent base stations transmit on the same frequency, this means that the listening base station should turn its transmitter off. This may cause some problems for synchronisation of new base stations, especially if base stations adjacent to a new base station are turned off. The problem is even more difficult when all base stations adjacent to a new base station turn their transmitters off at the same time. During initial synchronisation of the network according to the process of figures 1 and 2, this may happen, for instance where two adjacent base stations are used as reference base stations for two newly added base stations.

In order to limit problems raised by turning off the transmitters of the base stations, the invention suggests that the network monitor the turning off, so that a given base station does not turn its transmission off at the same time as adjacent base stations. Preferably, the network ensures that a given base station does not turn its transmission off at the same time as any of its adjacent base stations.

This management of the turning off may be carried out in the base station controller of the network ; one may use methods similar to frequency allocation methods to grant authorisations to each and every base station.

The problem does not arise only for initial synchronisation of new base stations; indeed, once initial synchronisation is carried out, it is needed to maintain synchronisation, because base station clocks may slip relative to each other. The maintenance rate will depend on the stability of BS clocks and on the required accuracy. Synchronisation may be maintained e. g. by carrying out between adjacent base stations the process of steps 6-10 of figure 1. Again, such base station to base station synchronisation makes it necessary to turn off the transmitter of listening base stations.

As for initial base station synchronisation, the invention suggest for maintaining synchronisation to allow a base station to turn its transmitter off only when adjacent base stations are transmitting. This may again be carried out by managing base stations turning off in the network, e. g. at UTRAN level.

It is thus proposed that each BS reports to UTRAN the SCH reference time differences with all its neighbouring BS, provided the base station receives the signals of the neighbouring base stations with a level sufficient to evaluate this time difference. The UTRAN could then collect information on time differences between all BSs and requests some BSs to change their time reference with a given shift, in order to maintain a global synchronisation. The overall control should permit to reduce the number of re-synchronisation, and ensure a good synchronisation of each BS with its neighbouring.

A number of solutions may ensure that a given base station does not turn itself off at the same time as its neighbouring base stations. The simplest solution is to use a regular pattern on a multiframe level, e. g. at 720 ms: in this case, neighbouring BSs interrupt their SCH one after the other. In this case, some kind of 'slotted mode pattern' with a 72-reuse factor, or less, could be implemented in the TDD network. In fact it is mainly required that each BS does not interrupt its SCH transmission in the same frame as its 6 closest neighbours. One SCH slot per multiframe should be sufficient to maintain synchronisation : it might even be too much, but a lower pace could create signalling problems.

Another solution is for each base station to request authorisation from the network each time it wishes to turn itself off for listening. This solution clearly involves more signalling.

According to one feature of the invention, a station may broadcast the timing of its turning off. In case a multiframe pattern is used, if a base station is turned off at one slot of the multiframe, the base station may broadcast the number of the slot in which it will turn off. Even where the turning off does not occur on a periodic basis, a base station may broadcast the timing of its turning off, e.g. for the next two frames.

In both cases, the broadcast information may be used by mobile stations to foresee the turning off of a base station. This may allow a mobile station not to take into account a base station at the time it is turned off, when the mobile station computes the mean level of base station. Foreseeing the turning off of base stations may also help a mobile station at the time it proceeds with handover from one cell to the other.

The broadcast information could also be used by other base station for determining whether they may or may not turn off their transmitters.

The invention also brings a solution to yet another problem. According to the synchronisation scheme disclosed above, the network is getting synchronised from one BS to another, but it may happen that sub-networks get synchronised independently of each other and become so close that a resynchronisation between them is needed. Resynchronisation may occur using the same process as above; it is also possible to use a specific procedure, when base stations are not close enough to mutually synchronise. In this case, the invention suggests synchronising base stations of each network by using a mobile station.

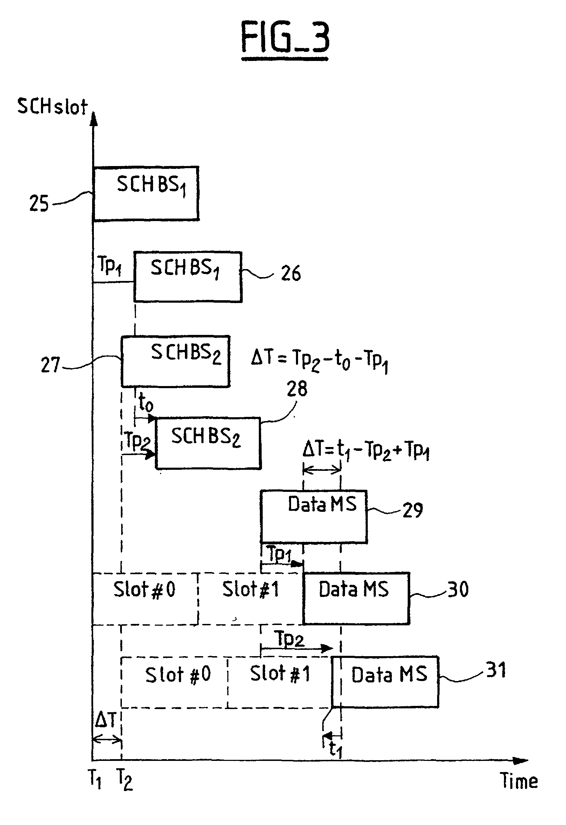

Figure 3 shows the timing reference acquisition when a mobile station is used for synchronising two base stations, which is not part of the present invention, while figure 4 shows a mobile station and two base stations carrying out the process of figure 3. As shown on figure 4, first and second base stations $BS_1$ and $BS_2$, each having their own time reference $T_1$ and $T_2$ are close enough that a mobile station MS. may receive and transmit from and to both base stations ; it is assumed for the sake of explanation that the first and second base stations are not close enough to listen to their SCH.

This may happen e. g. if the pathloss between two neighbouring BS is too large to detect the need for synchronisation, while mobile stations at cell boundary can receive both BSs with sufficient level. These mobiles will report BCCH measurements from BSs belonging to different sub-networks to the UTRAN, which can then detect the problem. However, in this case, it is not possible to perform a direct synchronisation between BSs on the radio interface, but the invention suggests using the mobile as a relay.

The solution is explained with reference to figure 3; as for figure 2, only the offset with respect to the slot is represented on the figure. At 25, the first base station transmits is SCH. This is received at 26 by the mobile station, with an offset $T_{p1}$ representative of the propagation time from the first base station to the mobile station. This offset may be evaluated by the first base station for Timing Advance purposes, in a way known per se.

At 27, the second base station transmits its SCH. The mobile station receives the SCCH at 28, with an offset $T_{p2}$ with respect to $T_2$ representative of the transmission time from the second base station to the mobile station ; $t_D$ is the time offset between the SCH received from the first base station and the SCH received from the second base station.

At 29, the mobile station transmits its data, with a timing advance $T_{p1}$ on slot # i. Due to the timing advance, the data is received by the first base station at slot # i, see 30. However, as shown at 31, the second base station receives mobile station data on slot # j, with a delay $t_1$.

In this case, $T_{p2}$ and $\Delta t$ may then computed by resolving two equations with two unknown values.

$$\Delta T = T_{p2} - t_D - T_{p1}$$

$$\Delta T = t_1 - T_{p2} + T_{p1}$$

In other words, the mobile station measures the difference between reception of synchronisation signals from both base stations; thereafter, the mobile station is synchronised to the first base station, and the second base station then measures the offset of data received from the mobile station.

This process for synchronising base stations, through a mobile station, which is not part of the present invention, may be carried out even where there is no management of the turning off of the base stations. It provides a simple solution for synchronising sub-networks, or expanding networks.

It is clear to the person skilled in the art that the preferred embodiments disclosed above may be changed . Notably, the invention was discussed in reference to a TDD network; it may apply to other types of network where adjacent base stations transmit on the same frequency, e.g. for a FDD network with a frequency reuse pattern of 1. The invention was also described in reference to UMTS ; it also applies to classical TDMA TDD networks.

## Claims

1. A process for synchronising base stations in a wireless communication system, where adjacent base stations transmit on a same frequency, said process comprising turning off transmission in a base station for listening to adjacent base stations, so that a given base station does not turn its transmission off at the same time as adjacent base stations, said process comprising synchronising a base station to a reference station comprising :

- a step (4) of turning off the base station for listening to a synchronisation signal of the reference station;
- a step (7) of turning off the reference station for listening to a synchronisation signal of the base station;
- in the reference station, a step of computing the offset of the synchronisation signal received from the base station and of sending this offset ;
- in the base station, a step (8) of synchronisation according to the offset received.

2. The process of claim 1 , wherein the reference base station is a best received base station.

3. The process of any of claims 1 to 2, wherein the system is a TDD system.

4. A wireless communication system, carrying out the process of one of claims 1 to 3.

**Patentansprüche**

1. Verfahren zum Synchronisieren von Basisstationen in einem drahtlosen Kommunikationssystem, bei dem benachbarte Basisstationen auf einer gleichen Frequenz senden, wobei das Verfahren das Abschalten der Übertragung in einer Basisstation zum Abhören von benachbarten Basisstabionen derart, dass eine gegebene Basisstation ihre Übertragung nicht zur gleichen Zeit wie benachbarte Basisstationen abschaltet, umfasst, wobei das Verfahren das Synchronisieren einer Basisstation auf eine Referenzstation umfasst, mit:

- einem Schritt (4) des Abschaltens der Basisstation zum Abhören eines Synchronisationssignals der Referenzstation;

- einem Schritt (7) des Abschaltens der Referenzstation zum Abhören eines Synchronisationssignals der Basisstation;

- in der Referenzstation, einem Schritt des Berechnens der Verschiebung des von der Basisstation empfangenen Synchronisationssignals und des Sendens dieser Verschiebung;

- in der Basisstation, einem Schritt (8) des Synchronisierens gemäß der empfangenen Verschiebung.

2. Verfahren nach Anspruch 1, bei dem die Referenzbasisstation eine am besten zu empfangende Basisstation ist.

3. Verfahren nach einem der Ansprüche 1 bis 2, bei dem das System ein TDD-System ist.

4. Drahtloses Kommunikationssystem, das das Verfahren nach einem der Ansprüche 1 bis 3 ausführt.

**Revendications**

1. Traitement pour synchroniser des stations de base dans un système de communication sans fil, où des stations de base adjacentes émettent sur une même fréquence, ledit traitement comprenant l'arrêt de l'émission dans une station de base pour écouter des stations de base adjacentes, de sorte qu'une station de base donnée n'arrête pas son émission en même temps que des stations de base adjacentes, ledit procédé comprenant la synchronisation d'une station de base sur une station de référence comprenant :

une étape (4) d'arrêt de la station de base pour écouter un signal de synchronisation de la station de référence ;
une étape (7) d'arrêt de la station de référence pour écouter un signal de synchronisation de la station de base ;
dans la station de référence, une étape de calcul du décalage du signal de synchronisation reçu de la station de base et d'envoi de ce décalage ;
dans la station de base, une étape (8) de synchronisation selon le décalage reçu.

2. Traitement selon la revendication 1, dans lequel la station de base de référence est une station de base mieux reçue ;

3. Traitement selon l'une quelconque des revendications 1 à 2, dans lequel le système est un système TDD.

4. Système de communication sans fil, réalisant le traitement d'une des revendications 1 à 3.

FIG_1

1 — INITIALISATION OF BS$_{new}$ LISTENING OF SCH ON ALLOCATED FREQUENCY CARRIER

2 — Detection of SCH

No → 3 — BS$_{new}$ TRANSMITS ITS SCH AND PROVIDES THE TIMING REFERENCE T$_{ref}$

Yes → 4 — BS$_{new}$ SYNCHRONISES ON BEST RECEIVED CELL: BS$_{ref}$ SYNCHRO REFERENCE ON T$_{ref}$

5 — BS$_{new}$ STARTS TRANSMITTING SCH AND BCH ON T$_{new,init}=T_{ref}+\tau_p$

6 — BS$_{new}$ REQUESTS BS$_{ref}$ TO LISTEN TO ITS SCH

7 — BS$_{ref}$ EVALUATES $2t_1 = T_{ref} - tr_{BCCHNEW}$ AND RETURNS $t_1$ TO BS$_{new}$

8 — BS$_{new}$ UPDATES ITS REFERENCE ACCORDING TO $t_1$: $T_{new} = T_{new,init} - t_1$

9 — BS$_{new}$ EVALUATES $t_2 = T_{new} - tr_{BCCHref}$

10 — $|t_2-t_1| < \Delta t$ ?

No →

Yes → 11 — INITIAL SYNCHRONISATION OF BS$_{new}$ IS COMPLETED

SCH slot

15 — SCH BSref

$\tau_p$

16 — SCH BSref

17 — SCH BSnew

$2\tau_p$ SCH BSnew — 18

$-t_1$

19 — SCH BSnew

$t_2$ SCH BSref — 20

$T_{ref}$  $T_{new\text{-}init}$  Time

FIG_2

FIG_4

BS$_1$ T$_1$

BS$_2$ T$_2$

Tp$_1$

Tp$_2$

MS

# FIG_3

SCHslot

25 — SCHBS$_1$

$Tp_1$ | SCHBS$_1$ — 26

27 — SCHBS$_2$   $\Delta T = Tp_2 - t_0 - Tp_1$

$t_0$

28

$Tp_2$ | SCHBS$_2$

$\Delta T = t_1 - Tp_2 + Tp_1$

Data MS — 29

$Tp_1$

Slot #0 | Slot #1 | Data MS — 30

$Tp_2$

Slot #0 | Slot #1 | Data MS — 31

$\Delta T$

$t_1$

$T_1$  $T_2$                     Time